(19)

Europäisches Patentamt

European Patent Office

Office européen des brevets

(11) **EP 4 199 528 A1**

(12) **EUROPEAN PATENT APPLICATION**

(43) Date of publication:
**21.06.2023 Bulletin 2023/25**

(21) Application number: **22210753.4**

(22) Date of filing: **01.12.2022**

(51) International Patent Classification (IPC):
**H04N 23/11** (2023.01)    **H04N 23/70** (2023.01)
**G06T 5/50** (2006.01)    **H04N 23/71** (2023.01)
**H04N 23/72** (2023.01)

(52) Cooperative Patent Classification (CPC):
**H04N 23/11; G06T 5/50; H04N 23/71; H04N 23/72**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.12.2021   JP 2021205462**

(71) Applicant: **Canon Kabushiki Kaisha
Tokyo 146-8501 (JP)**

(72) Inventors:
• **YAMAGUCHI, Shota
Tokyo, 146-8501 (JP)**
• **KUBO, Yukiko
Tokyo, 146-8501 (JP)**

(74) Representative: **TBK
Bavariaring 4-6
80336 München (DE)**

(54) **IMAGE PROCESSING APPARATUS, IMAGE CAPTURE APPARATUS, AND IMAGE PROCESSING METHOD**

(57)    An image processing apparatus (100) that determines settings for capturing an invisible light image to be combined with a visible light image is disclosed. The image processing apparatus (100) determines (i) a first target value relating to a signal level of an invisible light image for adjusting brightness of the visible light image, (ii) a second target value relating to a signal level of an invisible light image for adjusting contrast of the visible light image, (iii) a final target value using the first target value and the second target value, and (iv) settings for capturing the invisible light image based on the final target value.

FIG. 2

START

SEQUENTIALLY CAPTURE VISIBLE LIGHT IMAGES AND INFRARED IMAGES — S203

UPDATE SETTINGS FOR CAPTURING — S205

HAS IMAGE CAPTURE START INSTRUCTION BEEN INPUT? — S207
NO
YES

CAPTURE VISIBLE LIGHT IMAGES AND INFRARED IMAGES — S209

COMBINE INFRARED IMAGE DATA WITH VISIBLE LIGHT IMAGE DATA — S211

GENERATE AND RECORD IMAGE DATA FOR RECORDING — S213

END

**EP 4 199 528 A1**

**Description**

BACKGROUND OF THE INVENTION

Field of the Invention

The present invention relates to an image processing apparatus, an image capture apparatus, and an image processing method.

Description of the Related Art

A method has been proposed that combines a visible light image, which has been captured in a scene with reduced visibility due to mist, with an infrared image captured in the same scene to improve the visibility of the visible light image (see Japanese Patent Laid-Open No. 2017-157902).

In more detail, by increasing a ratio of a combined invisible light image in regions of the visible light image where the visibility is poor, the visibility of the visible light image is improved on a region-by-region basis. In addition, the settings for capturing the invisible light image (that is, the exposure conditions) are set so that the invisible light image and the visible light image have a similar brightness in regions where the invisible light image is combined with a high ratio.

However, with the method disclosed in Japanese Patent Laid-Open No. 2017-157902, if a region where the invisible light image is combined with a high ratio is very dark, settings for capturing images are set so that the invisible light image is also very dark, so that an effect of improving visibility is not sufficiently obtained. The same also happens when a region where the invisible light image is combined with a high ratio is very bright.

SUMMARY OF THE INVENTION

The present invention was conceived in view of the problem with the related art described above, and according to one aspect, the present invention provides an image processing apparatus capable of making settings for capturing an invisible light image which, when combined with a visible light image, effectively improves the image quality of the visible light image.

The present invention in its first aspect provides an image processing apparatus as specified in claims 1 to 19.

The present invention in its second aspect provides an image capture apparatus as specified in claims 20 to 21.

The present invention in its third aspect provides an image processing method as specified in claim 22.

The present invention in its fourth aspect provides a computer program as specified in claim 23.

Further features of the present invention will become apparent from the following description of exemplary embodiments (with reference to the attached drawings).

BRIEF DESCRIPTION OF THE DRAWINGS

FIG. 1 is a block diagram depicting an example functional configuration of an image capture apparatus as an image processing apparatus according to an embodiment.

FIG. 2 is a flowchart relating to an operation of an image capture apparatus according to a first embodiment.

FIG. 3 is a flowchart relating to an operation of the image capture apparatus according to the first embodiment.

FIG. 4 is a diagram schematically depicting examples of a visible light image and an infrared image.

FIG. 5 is a diagram depicting an example of division into blocks according to the first embodiment.

FIG. 6 depicts a method of determining a first target value according to the first embodiment.

FIGS. 7A and 7B depict a method of determining a second target value according to the first embodiment.

FIG. 8 is a diagram relating to a weight to be used to determine a third target value according to the first embodiment.

FIG. 9 is a flowchart relating to an operation of an image capture apparatus according to a second embodiment.

FIG. 10 is a flowchart relating to an operation of the image capture apparatus according to the second embodiment.

FIGS. 11 Ato 11C are diagrams relating to a method of determining gain according to the second embodiment.

FIG. 12 is a diagram relating to a method of determining the gain according to the second embodiment.

FIG. 13 is a flowchart relating to an operation of an image capture apparatus according to a third embodiment.

FIG. 14 is a diagram relating to a method of determining settings for capturing images and gain according to the third embodiment.

DESCRIPTION OF THE EMBODIMENTS

Hereinafter, embodiments are described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

In the following embodiments, the case where the present invention is implemented in an image capture apparatus such as a digital camera is described. However, the present invention can also be implemented in an electronic appliance with an image capture function and a control apparatus capable of controlling such an electronic appliance. Such electronic appliances and control apparatuses include video cameras, computer devices (such as a personal computer, tablet computer, media player, or PDA), mobile phones, smart phones, game consoles, robots, drones, and dash cams. These devices are mere examples, and the present invention can also be implemented in other electronic appliances and control apparatuses.

Note that the configurations illustrated as blocks in the drawings can be realized by ICs (integrated circuits), such as an applications specific integrated circuit (ASIC) or a field programmable gate array (FPGA), by discrete circuits, and/or by a combination of a memory and a processor executing a program stored in the memory. Individual blocks may be realized by a plurality of integrated circuit packages, and/or a plurality of blocks may be realized by one integrated circuit package. The same block may be implemented by different configurations depending on the operating environment, required performance, and the like.

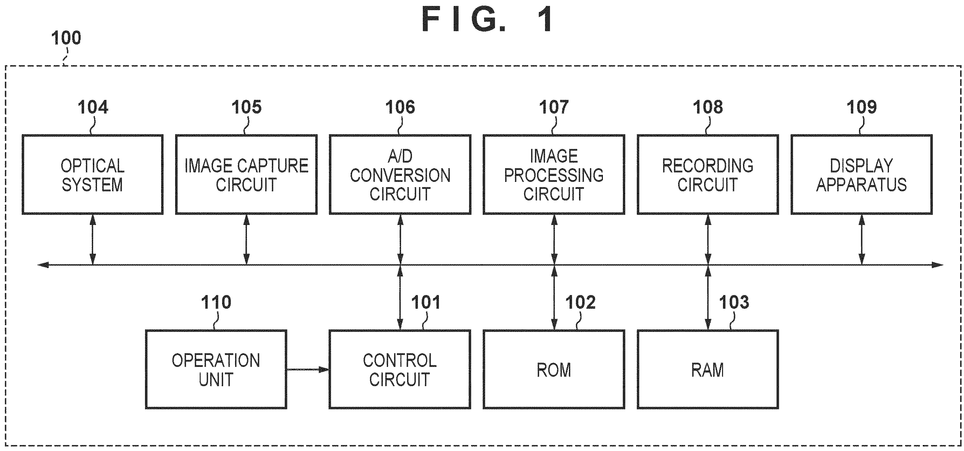

FIG. 1 is a block diagram depicting an example of the functional configuration of an image capture apparatus 100 as one example of an image processing apparatus according to the present invention. A control circuit 101 is a processor, such as a central processing unit (CPU), that is capable of executing a program. As one example, by loading a program stored in a read-only memory (ROM) 102 into a random access memory (RAM) 103 and executing the program, the control circuit 101 controls the operation of each functional block of the image capture apparatus 100 and thereby realizes the functions of the image capture apparatus 100. Note that when an optical system 104 is an interchangeable lens unit, the control circuit 101 controls the operation of the optical system 104 through communication with a controller included in the optical system 104.

The ROM 102 is a rewritable nonvolatile memory. The ROM 102 stores programs executed by the control circuit 101, various setting values of the image capture apparatus 100, graphics user interface (GUI) data, and the like. The RAM 103 is a main memory of the control circuit 101. The RAM 103 loads a program to be executed by the control circuit 101, holds parameters required to execute the program, and is used as a working memory of an image processing circuit 107. Part of the RAM 103 is used as a video memory that stores image data to be displayed on a display apparatus 109.

The optical system 104 has an imaging optical system, which is composed of a lens group including movable lenses (such as zoom lenses and focus lenses), and a drive circuit for the movable lenses. The optical system 104 may also have an aperture and a drive circuit for the aperture.

As examples, an image capture circuit 105 may be a known charged coupled device (CCD) or complementary metal oxide semiconductor (CMOS) color image sensor with a Bayer color filter array of the primary colors. The image sensor has a pixel array in which a plurality of pixels are arranged in two dimensions, and a peripheral circuit for reading signals from the pixels. Each pixel has a photoelectric conversion element, such as a photodiode, and accumulates charge according to an amount of incident light during an exposure period. A set of pixel signals (or "analog image signal") representing a subject image formed on an image capture surface is obtained by the imaging optical system by reading a signal with a voltage corresponding to the amount of charge accumulated during the exposure period from each pixel.

Note that in the present embodiment, the image capture circuit 105 is assumed to have an image sensor capable of capturing a visible light image and an invisible light image. As one example, this image sensor may use some of pixels included in the pixel array as pixels for capturing the invisible light image. The pixels that capture the invisible light image may be pixels that have an optical filter with a characteristic of transmitting a wavelength band of the invisible light and blocking the wavelength range of visible light.

As one example, in an image sensor provided with a Bayer color filter array of the primary colors, one of the two pixels (G pixels) provided with a green (G) filter included in the repeating pattern of color filters can be replaced with a pixel used to capture an invisible light image. In this case, a visible light image can be generated by interpolating the values of the G pixels, which would originally be present at the positions of the pixels that capture the invisible light image, using the values of other pixels in the same way as when interpolating values of defective pixels. The invisible light image may have the same resolution (number of pixels) as the visible light image by performing enlargement processing on an image obtained based on the signals of the pixels that capture the invisible light image.

Note that there are no particular limitations on the method of acquiring the visible light image and the invisible light image, and the images may be acquired by other methods. As one example, an image sensor for capturing a visible light image and an image sensor for capturing an invisible light image may be separately provided. Also, although it is assumed in the present embodiment that the invisible light image is an infrared image, the invisible light image may be an image of a different invisible wavelength band.

An analog-to-digital (A/D) conversion circuit 106 converts the analog image signal read from the image capture circuit 105 into a digital image signal. The A/D conversion circuit 106 writes the digital image signal into the RAM 103.

The image processing circuit 107 subjects the digital image signal stored in the RAM 103 to predetermined image processing to generate signals and/or image data suited to an application, and/or may acquire and/or generate various types of information. As examples, the image processing circuit 107 may be a dedicated hardware circuit, such as an ASIC designed to realize a specific function, or may be configured so that a programmable processor, such as a digital signal processor (DSP), executes software to realize a specific function.

The image processing applied by the image processing circuit 107 includes preprocessing, color interpolation processing, correction processing, detection processing, data manipulation processing, evaluation value calculation processing, special effects processing, and the like.

Preprocessing includes signal amplification, reference level adjustment, defective pixel correction, and the like.

Color interpolation processing is processing that interpolates the values of color components that cannot be obtained at the time of image capture, and is also referred to as "demosaicing".

Correction processing includes processing such as white balance adjustment, tone correction, correction (or "image restoration") of image defects caused by optical aberrations in the imaging optical system, correction of the influence of vignetting in the imaging optical system, and color correction. The correction processing further includes a combining process that combines an infrared image with the purpose of improving the visibility of a visible light image, which is described later.

Detection processing includes detection of feature regions (as examples, a face region and a human body region) and their movements, human recognition processing, and the like.

Data manipulation processing includes processing such as combining, scaling, encoding and decoding, and header information generation (data file generation).

Evaluation value calculation processing includes processing such as generation of signals and an evaluation value used for AF (autofocus detection) and generation of an evaluation value used for AE (automatic exposure control). The processing also includes generation of evaluation values for determining settings for capturing infrared images, which is described later.

Special effects processing includes processing such as the addition of a blur effect, changing color tones, and relighting.

Note that the above are mere examples of processing that can be applied by the image processing circuit 107, and the processing applied by the image processing circuit 107 is not limited to the above examples.

A recording circuit 108 records data onto a recording medium, such as a memory card, and reads data recorded on the recording medium. The recording medium does not have to be removable. Alternatively, the recording medium may be an external storage apparatus capable of communication.

The display apparatus 109 is a liquid crystal display, for example, and displays captured images, images read out by the recording circuit 108, information on the image capture apparatus 100, a GUI such as menu screens, and the like. By continuously capturing video and displaying the captured video on the display apparatus 109, it is possible to have the display apparatus 109 function as an EVF (electronic viewfinder). Note that the display apparatus 109 may be a touchscreen display.

The operation unit 110 is a general term for input devices (such as buttons, switches, and dials) provided for the user to input instructions into the image capture apparatus 100. Input devices that compose the operation unit 110 have names corresponding to assigned functions. As examples, the operation unit 110 includes a release switch, a video recording switch, an image capture mode selection dial for selecting an image capture mode, a menu button, direction keys, an enter key, and the like. The release switch is a switch for recording a still image. The control circuit 101 recognizes a half-pressed state of the release switch as an image capture preparation instruction, and a full-pressed state as an image capture start instruction. The control circuit 101 recognizes a pressing of a video recording switch during an image capture standby state as a recording start instruction for video, and recognizes a pressing during the recording of video as a recording stopping instruction. Note that the functions assigned to the same input device may be changeable. Input devices may also be software buttons or keys realized using a touch screen display.

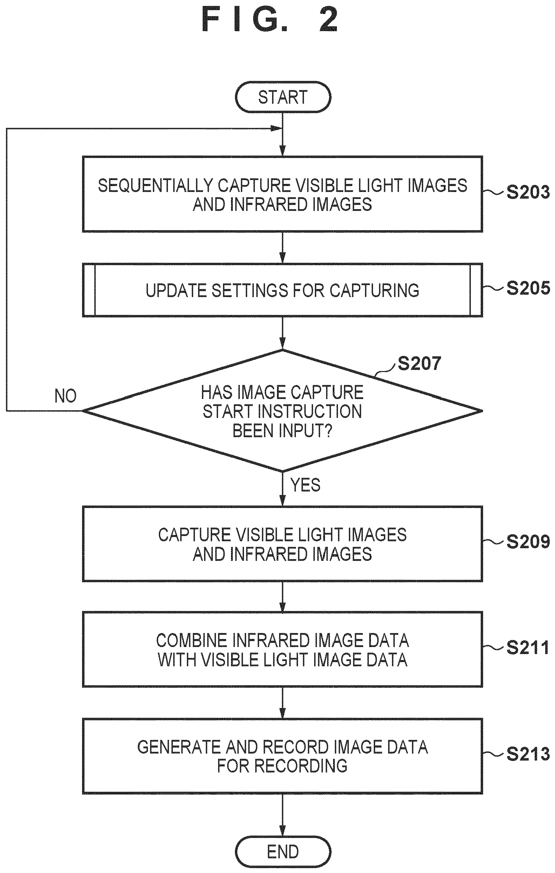

FIG. 2 is a flowchart relating to a process (or "enhancement process") which is executed by the image capture apparatus 100 to improve the image quality of a visible light image by combining an infrared image. Here, it is assumed that the enhancement process depicted in FIG. 2 is performed in an image capture standby state. Typically, the image capture standby state is a state in which the display apparatus 109 is caused to function as an EVF and input of an image capture instruction for a still image or video is awaited.

In step S203, the control circuit 101 controls the image capture circuit 105 to sequentially capture visible light images and infrared images. It is assumed that the settings for capturing images to be initially used are determined in advance. The image capture circuit 105 sequentially captures visible light images and infrared images. Analog image signals of the visible light images and the infrared images obtained by image capture are converted into digital image signals via the A/D conversion circuit 106 and stored in the RAM 103.

As necessary, to compensate for insufficient pixel data, the image processing circuit 107 subjects the digital image signals to interpolation and/or enlargement processing. After this, a digital signal of a visible light image (hereinafter referred to as the "visible light image data") and a digital signal of the infrared image (hereinafter referred to as "infrared image data") with the same resolution are stored in the RAM 103.

Note that the image capture in step S203 may also serve as image capture of video that is captured for a live view display performed in the image capture standby state. As one example, video may be captured at 60 frames per second, with visible light images and infrared images being read alternately. In this case, the visible light image data is also used to generate image data for the live view display. The settings for capturing images may differ between frames for acquiring visible light images and frames for acquiring infrared images. Note that when visible light images and infrared images are acquired as video frames, it is sufficient to acquire one frame at a time when executing step S203 and it is not necessary to execute step S203 in keeping with an image capture frame rate of video.

In step S205, the control circuit 101 updates the settings for capturing infrared images to be used to improve the image quality or visibility of visible light images based on the visible light image data and the infrared image data. The processing in step S205 is described in detail later. The settings for capturing images are parameters relating to the exposure amount used during image capture, such as shutter speed (exposure period), aperture value, and International Organization for Standardization (ISO) sensitivity.

The control circuit 101 also updates the settings for capturing the visible light images based on a known AE (automatic exposure control) method, for example.

In step S207, the control circuit 101 determines whether an image capture start instruction has been inputted via the operation unit 110. It is assumed here that the determination relates to an image capture start instruction for a still image. If it is determined that an image capture start instruction has been inputted, the control circuit 101 executes step S209. If it is not determined that an image capture start instruction has been inputted, the control circuit 101 repeatedly executes steps S203 and S205.

In step S209, the control circuit 101 controls the image capture circuit 105 to capture a visible light image and an infrared image for recording purposes according to the settings for capturing images that were updated in the most recent execution of step S205. Images for recording purposes typically have a higher resolution than images used for the live view display.

In step S211, the control circuit 101 controls the image processing circuit 107 to subject the visible light image data obtained in step S209 to an enhancement process that combines the visible light image data with data of an infrared image. The enhancement process is processing that improves the image quality or visibility of a visible light image. The region(s) to be subjected to the enhancement process and the method of combining the infrared image can be determined in step S205, for example.

Note that it is possible to combine all or some of the frequency components of an infrared image with a visible light image. As one example, in regions where the visibility of a subject is reduced due to mist or haze, it is possible to improve the visibility of the subject by enhancing edges by combining only high frequency alternating current (AC) components of the infrared image. Note that when only AC components are combined, although it is possible to simply add the AC components, it is also possible to adjust the level (gain) of the AC components before adding so that changes in brightness caused by the combining are not conspicuous.

On the other hand, in regions where the subject has reduced visibility due to being too dark or too bright, edge enhancement has little effect in improving the visibility of the subject in such regions. For this reason, it is possible to further improve the visibility of subjects in such regions by combining all frequency components of the infrared image, including low frequency direct current (DC) components. In this way, by combining an infrared image according to the state of a region in a visible light image where the infrared image is to be combined, it is possible to improve the visibility of subjects more appropriately.

Under control by the control circuit 101, the image processing circuit 107 combines the infrared image data with the visible light image data to generate combined image data.

In step S213, the image processing circuit 107 subjects the combined image data to image processing to generate image data for recording purposes. The image processing performed here may differ depending on a recording format. As examples, when recording in Joint Photographic Experts Group (JPEG) format or High-Efficiency Image File Format (HEIF) format, the image processing includes color interpolation processing and encoding processing.

The image data for recording purposes is recorded on a recording medium as an image data file by the recording circuit 108.

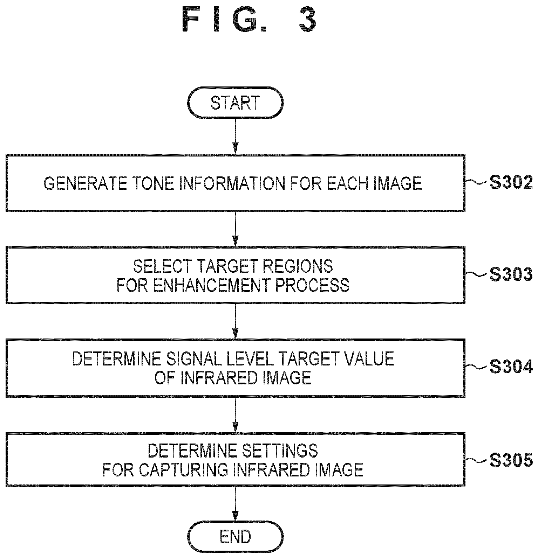

Next, the updating process for the settings for capturing images in step S205 is further described using the flowchart depicted in FIG. 3.

In step S302, the control circuit 101 causes the image processing circuit 107 to generate tone information on the visible light image data and the infrared image data. The visible light image data at this stage is in a state in which individual pixel data that construct the visible light image data each have one color component value corresponding to the color of the color filter provided at each pixel. Such image data is referred to as "RAW data" in this specification.

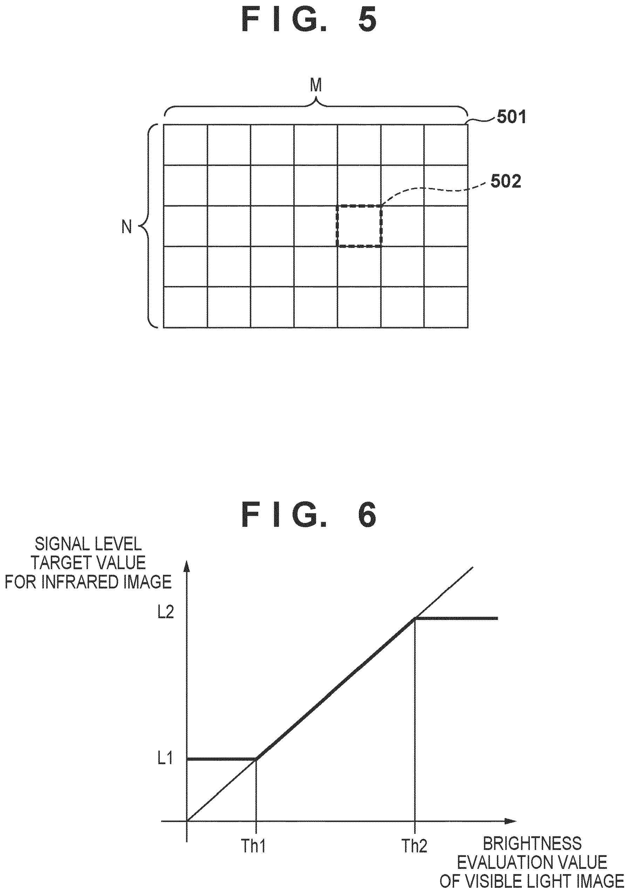

One example of a method of generating tone information will now be described. Here, it is assumed that an evaluation value of edge intensity is generated as tone information. As depicted in FIG. 5, the image processing circuit 107 divides an image 501 into M parts in the horizontal direction and N parts in the vertical direction to generate M times N blocks 502 (where M and N are predetermined integers that are two or higher). The image processing circuit 107 then generates an evaluation value for each block.

In more detail, the image processing circuit 107 extracts edge components for each block using a known method, such as applying a spatial filter to one of the RGB components (assumed here to be the G component). For pixels where a G component has not been obtained, the edge component may be extracted after obtaining the G component through interpolation. The image processing circuit 107 then generates an integral value of the extracted edge components as an evaluation value of the block. A large evaluation value indicates that the image in the block includes many edge components.

As one example, assume that the edge intensity at coordinates (i, j) in a certain block is $e(i, j)$ (where i and j are integers and $0 \leq i, j \leq$ maximum values determined according to the block size). In this case, the evaluation value E of a block can be generated by the following equation (1).

$$E = \Sigma_i \, \Sigma_j \, e \, (i, \, j) \, \cdots \, (1)$$

Note that the evaluation value E of edge intensity may be obtained by another method.

In step S303, based on the evaluation values generated by the image processing circuit 107, the control circuit 101 (or "region determination means") determines regions (or "target regions for the enhancement process") where visibility in the visible light image is to be improved in units of the blocks described above.

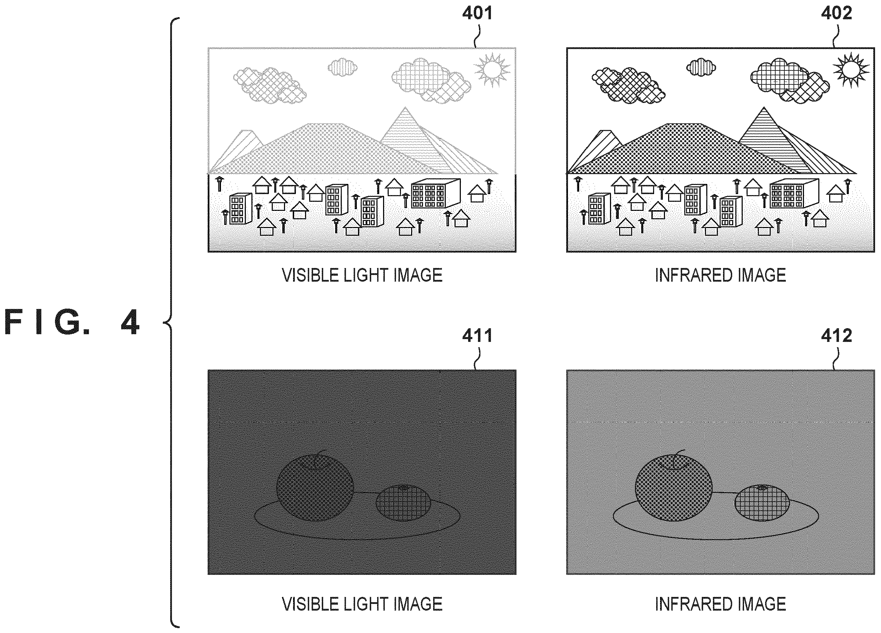

As one example, in the visible light image schematically depicted in 401 in FIG. 4, distant subjects have reduced contrast due to mist or haze. An infrared image of the same scene is schematically depicted in 402 in FIG. 4. Since the infrared image is less susceptible to a fall in contrast due to mist or haze, by combining a distant view portion of the infrared image with the visible light image, it is possible to improve the visibility of the distant subjects. Accordingly, in step S303, the control circuit 101 determines regions such as the distant view portion in the visible light image 401 in FIG. 4 as target regions for the enhancement process.

Since blocks with low image contrast have few edge components, the evaluation value of edge intensity will be small. In addition, since contrast is low in blocked-up shadow regions that have been schematically depicted in 411 and 412 in FIG. 4 and also in over-exposed regions, not illustrated, the evaluation value of the edge intensity will be small.

The control circuit 101 compares the evaluation values generated for the visible light image data and the infrared image data for each corresponding block. The control circuit 101 then determines blocks where the edge evaluation value of the visible light image data is small (as one example, a first threshold or below) and the difference with the edge evaluation value of the infrared image data is large (as one example, a second threshold or above) as target regions for the enhancement process. Note that the first threshold and the second threshold can be determined in advance through experimentation, for example.

Note that the target regions for the enhancement process may be determined by another method. As one example, deterioration in the visibility of subjects due to mist or haze tends to occur in the distance. For this reason, regions where the subject distance is equal to or greater than a distance threshold may be determined as target regions for the enhancement process.

Alternatively, the user may be presented with a visible light image and urged to select the target regions for the enhancement process. Two or more of the plurality of methods described here as examples may be combined to determine the target regions of the enhancement process.

The control circuit 101 stores information specifying the determined target regions of the enhancement process in the RAM 103 to enable the information to be used during the combining process. Note that when the enhancement process is performed after recording the visible light image data, the recording circuit 108 may record the infrared image data to be used for the enhancement process and information specifying the target regions for enhancement process in association with the visible light image data.

In step S304, the control circuit 101 determines a signal level target value for determining the settings for capturing the infrared image to be used in the enhancement process. In the present embodiment, a final target value T is determined from a target value L (or "first target value") based on the brightness of the visible light image and a target value C (or "second target value") based on the contrast of the infrared image. As one example, the signal level of the infrared image may be the average value of pixels included in a region to be used in the enhancement process.

FIG. 6 is a diagram depicting an example of a method of determining the target value L based on the brightness of a visible light image. The target value L (or "first target value") is a target value for obtaining an infrared image suited to adjusting the brightness (or "signal level") in a target region for the enhancement process. The horizontal axis indicates an evaluation value for the brightness in a target region for the enhancement process in the visible light image, and as one example is an average luminance value of the target region for the enhancement process. As one example, the average luminance value can be obtained as the value of the Y component when the respective average values of the R, B, and G pixels in the target region for the enhancement process have been converted into YCbCr format.

As depicted in FIG. 6, when the brightness evaluation value is in a range that is not less than the first threshold value and not greater than the second threshold value, the control circuit 101 (or "first determination means") linearly increases the target value L of the signal level in regions of the infrared image to be used for the enhancement process in accordance with the increase in the brightness evaluation value of the visible light image. In FIG. 6, an example is depicted where, in a range where the brightness evaluation value is equal or above a first threshold Th1 and not greater than a second threshold Th2, the signal level target value L of regions of the infrared image to be used in the enhancement process is determined so as to be equal to the brightness evaluation value of the visible light image. Here, the signal level of a region in the infrared image to be used in the enhancement process may be the average value of the pixels in that region, and corresponds to the brightness evaluation value of the visible light image.

On the other hand, in a range where the brightness evaluation value is below the first threshold Th1 (that is, less than the "first threshold" mentioned above), the control circuit 101 fixes the signal level target value L of regions in the infrared image to be used for the enhancement process at a signal level target value L1 for when the brightness evaluation value is equal to the first threshold value Th1. In this way, by preventing the signal level target value L of the infrared image from falling below a certain value, it is possible to set settings for capturing images capable of acquiring an infrared image that improves the visibility of subjects in regions where blocked-up shadows occur in the visible light image.

In the same way, in a range where the brightness evaluation value is above the second threshold Th2, the control circuit 101 fixes the signal level target value L of regions in the infrared image to be used for the enhancement process at a signal level target value L2 for when the brightness evaluation value is equal to the second threshold Th2. In this way, by preventing the signal level target value L of the infrared image from rising beyond a certain value, it is possible to set settings for capturing images capable of acquiring an infrared image that improves the visibility of subjects in regions where blowing out occurs in the visible light image. The first threshold Th1 and the second threshold Th2 for the brightness evaluation value are thresholds for determining blocked-up shadow regions and blown-out regions, and can be determined in advance through experimentation, for example.

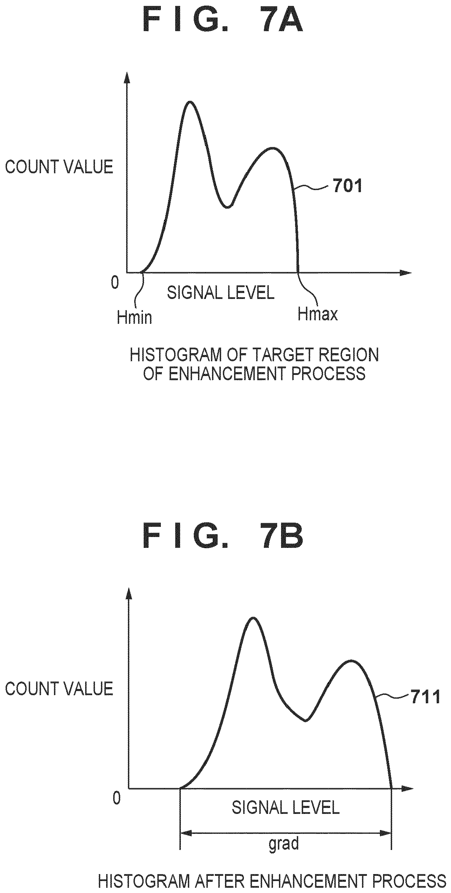

Next, a method for determining the target value C (or "second target value") based on the contrast of the infrared image is described. In FIG. 7A, 701 is an example of a histogram of pixel values (signal levels) included in a region in the infrared image to be used for the enhancement process. In FIG. 7B, 711 depicts an example of a histogram of the same region after the enhancement process.

As described earlier, in a target region for the enhancement process, the evaluation value of edge intensity in the infrared image is larger than the evaluation value of edge intensity in the visible light image. This corresponds to infrared images having higher contrast than visible light images. This means that it is not essential to further increase the contrast of an infrared image. However, since the difference in evaluation values is a difference in relative contrast, an infrared image will not necessarily have sufficient contrast from the viewpoint of improving the image quality of, or the visibility of subjects in, a visible light image. It is also conceivable for the contrast of an infrared image to be too high.

For this reason, in the present embodiment, an appropriate contrast from the viewpoint of improving the image quality of, or the visibility of subjects in, a visible light image is determined in advance through experimentation as a contrast target value grad. The control circuit 101 (or "second determination means") then obtains a signal level target value C for an infrared image so that the contrast of the infrared image becomes the target value grad. The signal level target value C (or "second target value") is a target value for obtaining an infrared image suited to adjusting the contrast in the target regions for the enhancement process.

The control circuit 101 first obtains a correction amount k using the following equation (2)

$$k = grad \,/\, (H_{max} - H_{min}) \cdots (2)$$

where grad: contrast target value,

$H_{max}$: Maximum signal level in a region to be used for an enhancement process, in an infrared image obtained according to current settings for capturing images, and
$H_{min}$: Minimum signal level in a region to be used for an enhancement process, in an infrared image obtained according to current settings for capturing images.

The correction amount k corresponds to a multiplier for setting the current contrast to the target value.

Next, using the correction amount k, the control circuit 101 obtains the signal level target value C based on the contrast of the infrared image using the following equation (3)

$$C = k * H_{ave} \cdots (3)$$

where $H_{ave}$: Average signal level or median signal level in a region to be used for an enhancement process, in an infrared image obtained according to current settings for capturing images.

The control circuit 101 (or "third determination means") performs weighted addition of the first target value L based on the brightness evaluation value of the visible light image and the second target value C based on the contrast of the infrared image to obtain a final signal level target value T for the infrared image according to the following equation (4),

$$T = \alpha \times L + (1-\alpha) \times C \cdots (4)$$

where $\alpha$: weight of target value L ($0 \leq \alpha \leq 1$).

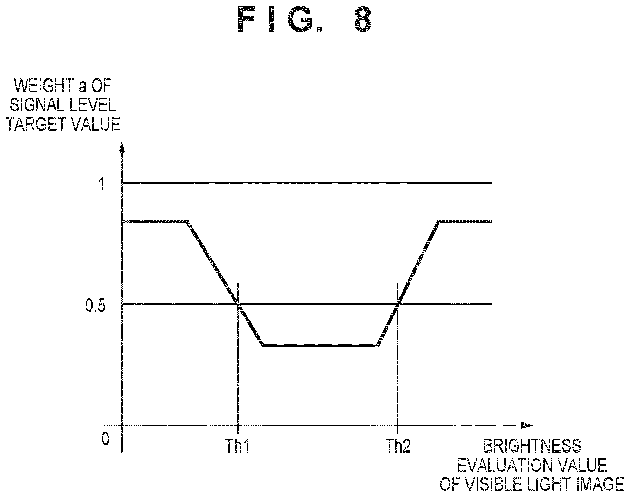

FIG. 8 is a diagram depicting an example relationship between the weight $\alpha$ of the target value L used in equation (4) and the brightness evaluation value of a target region for the enhancement process in a visible light image. When the enhancement process is performed on a block where the brightness evaluation value of the visible light image is below the first threshold Th1 or above the second threshold Th2, improvement of brightness is prioritized over the contrast of the visible light image. Accordingly, the weight of the signal level target value L is set larger than 0.5.

On the other hand, when the enhancement process is performed on a block where the brightness evaluation value of the visible light image is not less than the first threshold Th1 and not greater than the second threshold Th2, priority is given to improving contrast over the brightness of the visible light image. Accordingly, the weight $\alpha$ of the signal level target value L is set smaller ($\alpha < 0.5$) than the weight ($1-\alpha$) of the signal level target value C. Note that it is sufficient for the weight $\alpha$ of the signal level target value L for a block where improvement of contrast is prioritized to be smaller than the weight $\alpha$ of the signal level target value L for a block where improvement of the signal level is prioritized and does not need to be below 0.5.

Finally, in step S305, the control circuit 101 (or "fourth determination means") determines (that is, updates) the settings for capturing infrared images based on the signal level target value T determined in step S304. When the signal level target value T is an exposure amount Ev value, it is possible to determine settings for capturing images that achieve the signal level target value T as a combination of a shutter speed Tv and an aperture value Av by referring to a predetermined program chart. Note that since it is desirable for an infrared image and a visible light image to have a matching depth of field, the control circuit 101 can determine the settings for capturing the infrared image with priority to using the same aperture value as the settings for capturing the visible light image.

An image sensor may have different sensitivities for visible light and infrared light. For this reason, in cases where a program chart is used to determine the settings for capturing infrared images, by using a program chart dedicated to infrared images, it is possible to control the signal level of an infrared image with high accuracy.

Alternatively, a correction amount (or "exposure adjustment amount") for the current settings for capturing images may be obtained without using a program chart. The control circuit 101 may obtain an exposure adjustment amount EV for achieving the signal level target value T using the following equation (5) for example.

$$EV = \log_2 (T / H_{ave}) \cdots (5)$$

As described earlier, $H_{ave}$ is the average signal level or the median value of the signal level in a region to be used for the enhancement process, in an infrared image obtained according to the current settings for capturing images.

The exposure adjustment amount EV is a value indicating the difference in steps between an exposure amount that achieves the signal level target value T and an exposure amount under the current settings for capturing images. As one example, when EV=1, this indicates that it is necessary to adjust the exposure to become one step brighter from the current settings for capturing images. Accordingly, it is possible for the control circuit 101 to update the current settings for capturing infrared images by any one of halving the shutter speed (that is, doubling the exposure time), halving the aperture value, and doubling the ISO sensitivity. Note that in this case also, it is possible for the control circuit 101 to update the settings for capturing the infrared images by giving priority to using the same aperture value as the settings for capturing the visible light images. Note also that if the amount of light is insufficient, an auxiliary light source, such as an infrared flash, may be used.

Here, for ease of explanation and comprehension, a case where there is one target region for the enhancement process (which may include a plurality of adjacent blocks) has been described. However, it is also conceivable for there to be a plurality of target regions for the enhancement process. In this case, a plurality of sets of settings for capturing images may be determined based on the target values T of individual target regions, and one infrared image (that is, one frame) may be captured for each set of settings for capturing images. In this case, it is possible to extract pixel data of the region to be used in the enhancement process from each frame and use the extracted data in the combining process. Alternatively, one set of settings for capturing images may be determined based on a representative value or an average value for the plurality of target values T, and a single frame of infrared images may be captured.

According to the present embodiment, settings for capturing an invisible image to be combined with a visible light image are determined from the viewpoint of improvement of signal level and the viewpoint of improvement of contrast. This means that it is possible to capture an invisible image suited to the regions in the visible light image where the invisible image is to be combined, and possible to effectively improve the visibility of subjects in, and the image quality of, the visible light image.

Second Embodiment

Next, a second embodiment of the present invention is described. In the first embodiment, a method for determining the settings for capturing infrared images is described for a case where a visible light image and an infrared image can be captured under separate settings for capturing images. In the present embodiment, the operation is described for a case where the visible light image and the infrared image are captured under the same settings for capturing images.

Note that since the present embodiment can also be implemented by the image capture apparatus 100, the present embodiment is also described using the components of the image capture apparatus 100.

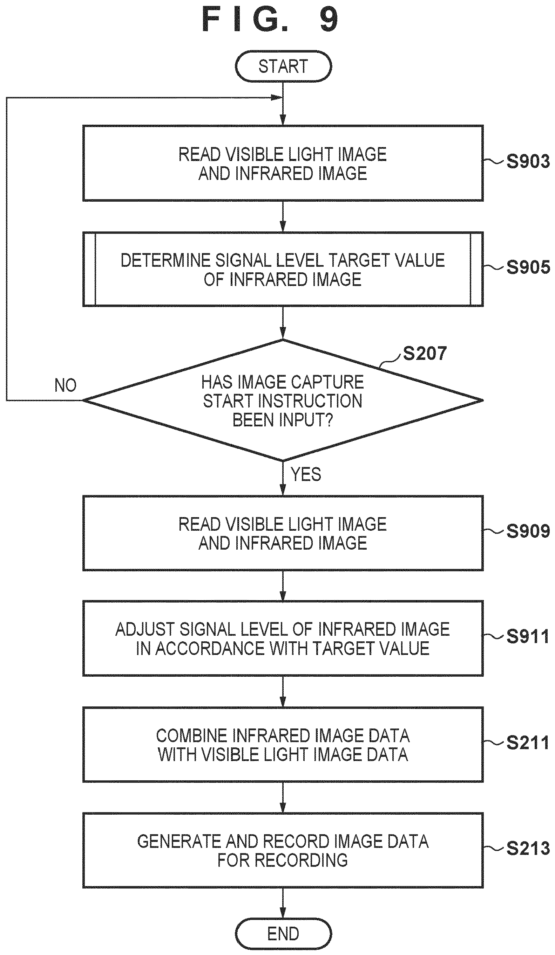

FIG. 9 is a flowchart relating to processing executed by the image capture apparatus 100 according to the second embodiment to improve the image quality of a visible light image by combining an infrared image. Steps that perform the same operations as in the first embodiment have been assigned the same reference numerals as in FIG. 2.

In step S903, the control circuit 101 controls the image capture circuit 105 to capture a visible light image and an infrared image. It is assumed that the settings for capturing images to be initially used are determined in advance. The image capture circuit 105 performs image capture once using suitable settings for capturing visible light images and reads an analog image signal of a visible light image and an analog image signal of an infrared image from the image sensor.

After this, in the same way as in the first embodiment, a digital signal of the visible light image (hereinafter referred to as the "visible light image data") and a digital signal of the infrared image (hereinafter referred to as the "infrared image data") of the same resolution are stored in the RAM 103.

In step S905, the control circuit 101 determines a signal level target value of the infrared image data. The processing in step S905 is described in detail later. The control circuit 101 also updates the settings for capturing visible light images based on a known automatic exposure control (AE) method, for example.

In step S207, the control circuit 101 determines whether an image capture start instruction has been inputted via the operation unit 110. It is assumed here that the determination relates to an image capture start instruction for a still image. If it is determined that an image capture start instruction has been inputted, the control circuit 101 executes step S909. If it is not determined that an image capture start instruction has been inputted, the control circuit 101 repeatedly executes steps S903 and S905.

In step S909, the control circuit 101 controls the image capture circuit 105 to capture a visible light image and an infrared image for recording purposes according to the settings for capturing visible light images that were updated in the most recent execution of step S905. In the same way as step S903, visible light image data and infrared image data of the same resolution are stored in the RAM 103.

In step S911, the control circuit 101 adjusts the signal level of the infrared image data obtained in step S909 based on the target value determined in S905. The processing in step S911 is described in detail later. Since the steps from step S211 onward are the same as those in the first embodiment, description thereof is omitted.

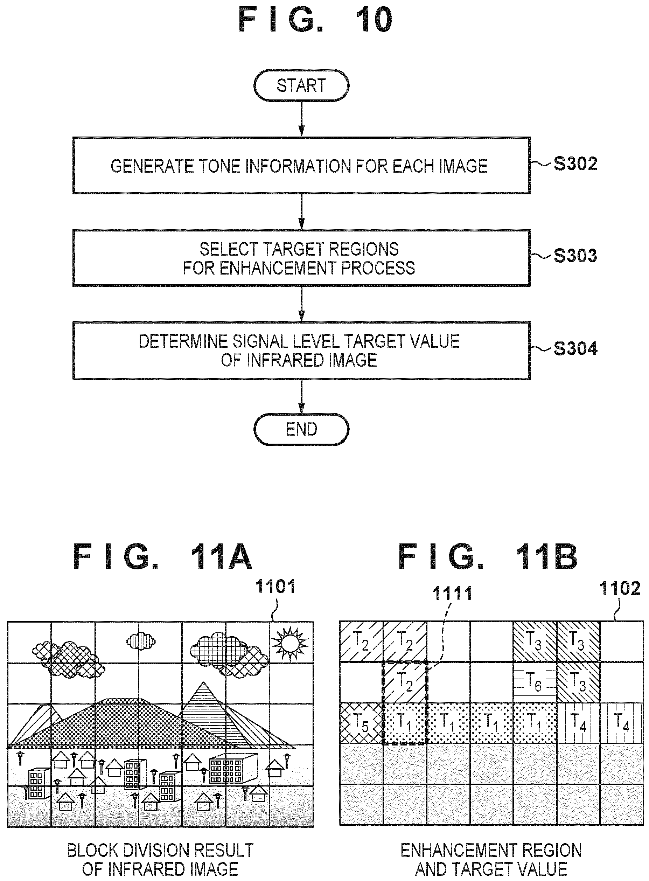

FIG. 10 is a flowchart depicting the details of the operation that determines the signal level target value in step S905. Steps that perform the same operations as in FIG. 3 described in the first embodiment have been assigned the same reference numerals as in FIG. 3. In this way, in the present embodiment, the operation that obtains the signal level target value T for infrared images is the same as in the first embodiment. Unlike the first embodiment, it is not possible in the present embodiment to separately set the settings for capturing infrared images, and for this reason the settings for capturing infrared images are not updated.

Next, a signal level adjustment operation for infrared image data in step S911 is described.

The control circuit 101 obtains a gain that sets the signal level of the infrared image data at the target value T determined in step S905 according to the following equation (6).

$$\text{gain} = T / H_{ave} \cdots (6)$$

$H_{ave}$ is the average signal level or the median value of the signal level in a region to be used for the enhancement process, in an infrared image obtained under the current settings for capturing images.

Next, the control circuit 101 controls the image processing circuit 107 to adjust the signal level of the infrared image data by applying the obtained gain to individual pixel data included in regions to be used for the enhancement process in the infrared image data.

Here, if the pixel data to which the gain is to be applied is "input (x, y)" and the pixel data after the gain has been applied is "output (x, y)", the signal level adjustment can be expressed as

$$\text{output } (x, y) = \text{gain} \times \text{input } (x, y) \cdots (7).$$

Note that (x, y) are pixel coordinates in an image coordinate system.

When there are a plurality of target regions for the enhancement process and target regions with different target values T are adjacent, the difference in the target values T causes a step in the signal level at a boundary between the regions. For this reason, the gain is adjusted so as to change smoothly for blocks at the boundaries between target regions with different target values T.

FIG. 11A is one example of an infrared image 1101. FIG. 11B schematically depicts six target regions determined for the infrared image 1101 and target values $T_1$ to $T_6$ determined for the respective target regions. Each target region contains one or two more adjacent blocks 1102.

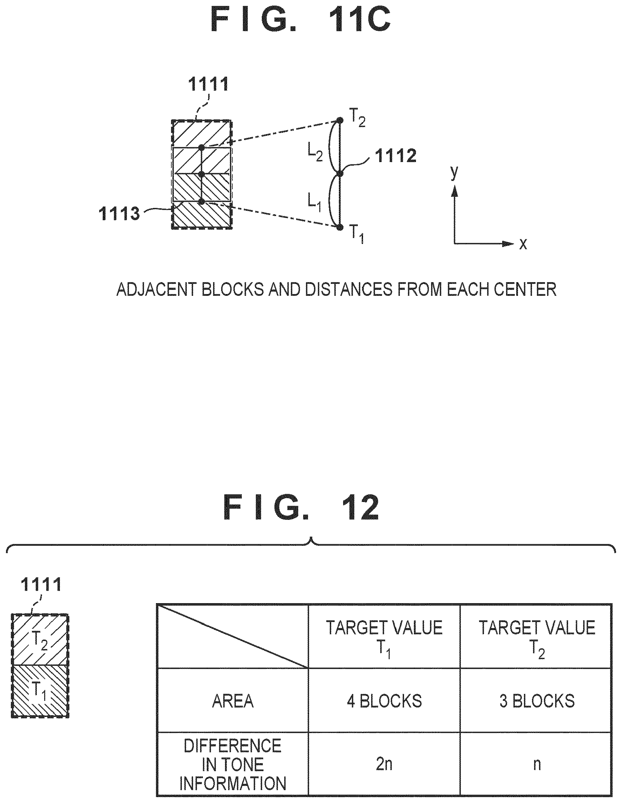

FIG. 11C depicts a region 1111 that includes two blocks present at boundary parts of target regions with different target values. The target value of the upper block included in the region 1111 is $T_2$, and the target value of the lower block is $T_1$.

In this case, to prevent the gain from changing in a non-continuous way at a block boundary, the control circuit 101 can obtain a target value $T_\alpha$ at an adjacent point 1112 of the blocks according to the following equation (8).

$$T_\alpha = L_2 / (L_1 + L_2) \times \alpha \times T_1 + L_1 / (L_1 + L_2) \times T_2 \cdots (8)$$

Here, as depicted in FIG. 11, $L_1$ and $L_2$ are distances from the centers of the adjacent blocks to the adjacent point 1112. Since the adjacent point 1112 is a midpoint on a straight line that joins the centers of the adjacent blocks, $L_1 = L_2$ and $T_\alpha = T_1/2 + T_2/2$.

For pixels included in a region 1113 present between the center of the upper block and the center of the lower block, the target value is determined according to equation (8) in keeping with the y coordinate of the pixel. As a result, target values in the y direction change continuously from $T_1$ to $T_2$, and the gain based on the target value also changes continuously.

In this way, in a region where target regions with different target values are adjacent, by making the target value a weighted sum of target values according to the distance from the center of adjacent blocks, non-continuous changes in the gain can be avoided.

Note that when target regions with different target values are adjacent to each other, the weight of the target value of one of the target regions may be increased. As one example, it is possible to increase the weight of the target value of a target region with a large area (that is, a large number of blocks) and/or a large difference in tone information. FIG. 12 depicts information on target regions relating to the region 1111 depicted in FIG. 11C.

In this case, the target region with the target value $T_1$ has a larger area (number of blocks) and a larger difference in tone information than the target region with the target value $T_2$. In this case, in equation (8), the weight of the target value $T_1$ is increased compared to the weight of the target value $T_2$ in order to obtain the target value $T_\alpha$.

According to the present embodiment, the signal level of an invisible image, which has been captured under the same settings for capturing images as a visible light image, is adjusted according to a target value determined with consideration to a viewpoint of improving the signal level and a viewpoint of improving contrast. This means that it is possible to obtain an invisible image suited to regions of the visible light image where the invisible image is to be combined, and to effectively improve the visibility of subjects in, and the image quality of, the visible light image.

Third Embodiment

Next, a third embodiment of the invention is described. The present embodiment relates to an operation when the settings for capturing infrared images for combining purposes are limited. Since the present embodiment can also be implemented by the image capture apparatus 100, the present embodiment is described using the components of the image capture apparatus 100.

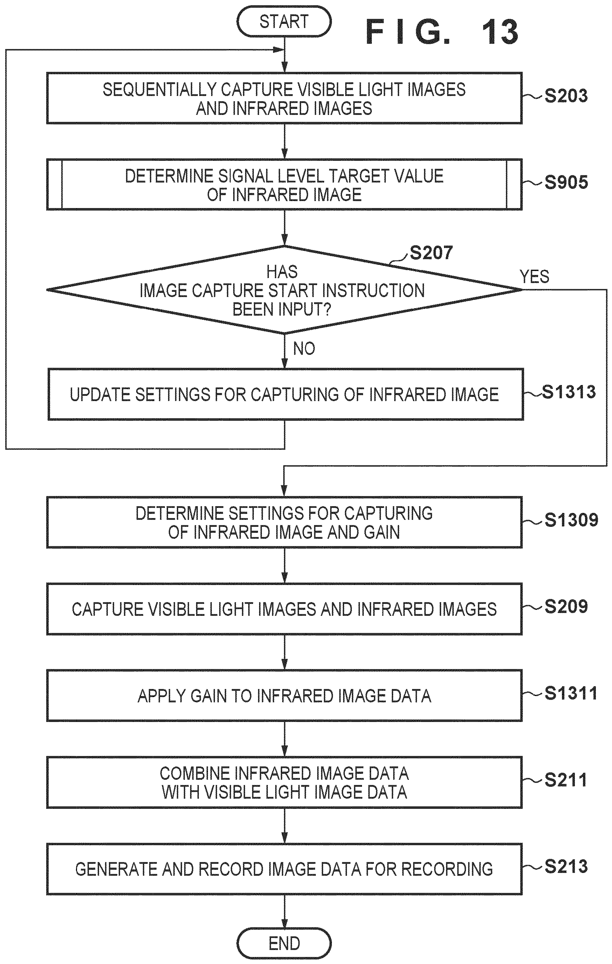

FIG. 13 is a flowchart relating to processing executed by the image capture apparatus 100 according to the third embodiment to improve the image quality of a visible light image by combining an infrared image. Steps that perform the same operations as in the first embodiment and the second embodiments have been assigned the same reference numerals as in FIG. 2 or FIG. 9.

Here, it is assumed that a lower limit value is set for the shutter speed as a limitation on the settings for capturing an infrared image for combining purposes, which is performed in response to an image capture start instruction. As one example, this may be a limitation intended to prevent blurring due to camera shake. Note that in cases where a minimum aperture value and/or a maximum ISO sensitivity is/are set, the same operation can be performed as when a lower limit value is set for the shutter speed.

In the same way as in the second embodiment, in the present embodiment, before determining in step S207 whether a still image capture instruction has been inputted, the signal level target value T for infrared images is determined but the settings for capturing images themselves are not determined.

In step S207, the control circuit 101 determines whether an image capture start instruction has been inputted via the operation unit 110. It is assumed here that determination relates to an image capture start instruction for a still image. If it is determined that an image capture start instruction has been inputted, the control circuit 101 executes step S1309. If it is not determined that an image capture start instruction has been inputted, the control circuit 101 executes step S1313.

In step S1309, the control circuit 101 determines the settings for capturing an infrared image for combining purposes with consideration to the limitation. If necessary, the control circuit 101 also determines a gain for adjusting the signal level of the infrared image. The operation in step S1309 is described in detail below.

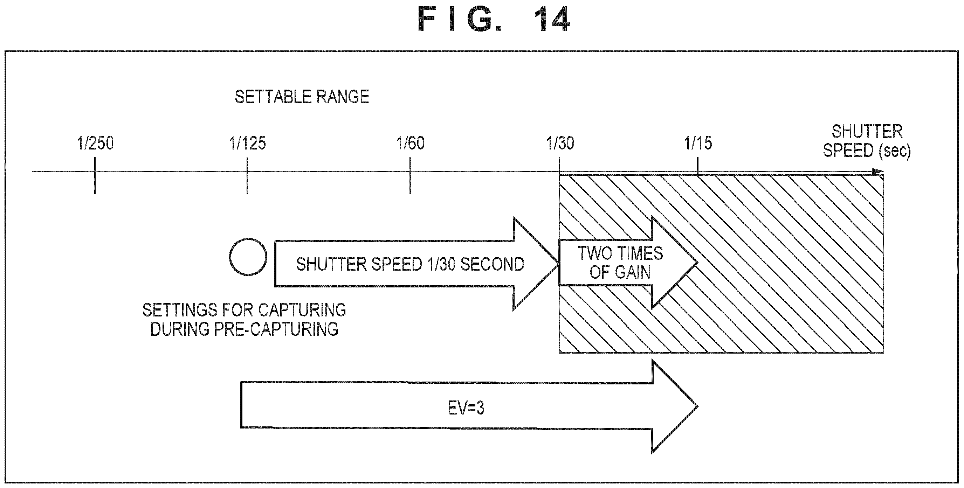

FIG. 14 schematically depicts one example of an operation that determines the settings for capturing images in step S1309. Here, it is assumed that among the parameters in the settings for capturing images, the lower limit of the shutter speed (that is, the slowest shutter speed) is limited to 1/30 s. It is also assumed that the shutter speed in the settings for capturing images during the pre-capturing of images in the most recent execution of step S203 has been 1/125 s.

First, the control circuit 101 obtains the exposure adjustment amount EV as described in the first embodiment, based on the signal level target value T determined in the most recent execution of step S905. Here, it is assumed that EV=3. To achieve EV=3 by adjusting only the shutter speed, it is necessary to set the shutter speed at 1/15 s. However, the lower limit of the shutter speed is limited to 1/30 s.

For this reason, the control circuit 101 sets the shutter speed in the settings for capturing images at 1/30 s. The control circuit 101 then determines a gain ($\times 2$) to compensate for one step of underexposure post-image capture. If settings for capturing images that match a target value cannot be achieved by adjusting shutter speed alone, one or more other parameters (aperture value and ISO sensitivity) in the settings for capturing images may be changed and/or an auxiliary light source that emits infrared light may be used. Here too, priority is given to setting the aperture value as close as possible to the settings for capturing visible light images.

On the other hand, in step S1313, the control circuit 101 determines (updates) the settings for capturing infrared images in the same way as in step S305 described with reference to FIG. 3 in the first embodiment. There are no particular limitations on the settings for capturing images determined here since these settings are not used to capture an infrared image for combining purposes. As one example, in the example depicted in FIG. 14, the control circuit 101 changes the shutter speed to 1/15 s. After this, the control circuit 101 repeats the processing from step S203.

In step S209, the control circuit 101 controls the image capture circuit 105 to capture a visible light image for recording purposes and an infrared image according to the settings for capturing visible light images determined in the most recent execution of step S905 and the settings for capturing images determined in step S1309.

If a gain has been determined in step S1309, in step S1311 the control circuit 101 instructs the image processing circuit 107 to apply the gain to the infrared image data. The image processing circuit 107 applies the gain to the infrared image data stored in the RAM 103. Note that if a gain has not been determined in step S1309, it is not necessary to execute step S1311. Aside from the use of infrared image data to which a gain has been applied, the operation from step S211 onward is the same as in the first embodiment, and for that reason description thereof is omitted.

Here, a case where there is a limitation on the settings for capturing infrared images has been described. However, from the viewpoint of preventing blurring due to camera shake, it is also possible for the settings for capturing visible light images to be limited. In this case, when determining the settings for capturing visible light images, it is possible to determine a gain in addition to the settings for capturing images, and to apply this gain to the visible light image data in step S1311.

In the present embodiment, when there is a limitation on the settings for capturing invisible light images for combining purposes and it is not possible to determine settings for capturing images that achieve the signal level target value within this limitation, a gain that compensates for insufficient exposure is applied to the invisible light image data after image capture. This means that in addition to the same effects as the first embodiment, it is also possible for example to suppress blurring of the invisible light image due to camera shake.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

An image processing apparatus (100) that determines settings for capturing an invisible light image to be combined with a visible light image is disclosed. The image processing apparatus (100) determines (i) a first target value relating to a signal level of an invisible light image for adjusting brightness of the visible light image, (ii) a second target value relating to a signal level of an invisible light image for adjusting contrast of the visible light image, (iii) a final target value using the first target value and the second target value, and (iv) settings for capturing the invisible light image based on the final target value.

**Claims**

1. An image processing apparatus (100) that determines settings for capturing an invisible light image to be combined with a visible light image, the image processing apparatus comprising:

   first determination means (101) for determining a first target value relating to a signal level of an invisible light image for adjusting brightness of the visible light image;
   second determination means (101) for determining a second target value relating to a signal level of an invisible light image for adjusting contrast of the visible light image;
   third determination means (101) for determining a final target value using the first target value and the second target value; and
   a fourth determination means (101) for determining settings for capturing the invisible light image based on the final target value.

2. The image processing apparatus (100) according to claim 1, further comprising:
   combining means (107) for combining the invisible light image, which has been captured in accordance with the settings determined by the fourth determination means (101), with the visible light image.

3. The image processing apparatus (100) according to claim 1 or 2, further comprising:
   region determination means (101) for determining, in the visible light image, a target region where the invisible light image captured according to the settings is to be combined.

4. The image processing apparatus (100) according to claim 3, wherein
   the region determination means (101) determines the target region based on tone information on the visible light image and tone information on the invisible light image that has been captured together with the visible light image.

5. The image processing apparatus (100) according to claim 4, wherein

the region determination means (101) determines the target region in units of blocks produced by dividing the visible light image, and

the tone information is an evaluation value of edge intensity in each block.

6. The image processing apparatus (100) according to claim 5, wherein
the region determination means (101) determines blocks, out of the plurality of blocks produced by dividing the visible light image, having the evaluation value not greater than a first threshold and a difference with the evaluation value of a corresponding block in the invisible light image is not less than a second threshold, as the target region.

7. The image processing apparatus (100) according to claim 5 or 6, wherein
the region determination means (101) determines blocks, out of the plurality of blocks produced by dividing the visible light image, where a subject distance is not less than a distance threshold, as the target region.

8. The image processing apparatus (100) according to any one of claim 5 to 7, wherein
the region determination means (101) determines blocks selected by a user out of the plurality of blocks produced by dividing the visible light image as the target region.

9. The image processing apparatus (100) according to any one of claims 1 to 6, wherein
the first determination means (101) determines the first target value according to a brightness of the visible light image.

10. The image processing apparatus (100) according to claim 9, wherein

the first target value is fixed at a first value in a case where the brightness of the visible light image is less than a third threshold; and
the first target value is fixed at a second value, which is larger than the first value, in a case where the brightness of the visible light image is greater than a fourth threshold.

11. The image processing apparatus (100) according to claim 10, wherein
the first target value has a value corresponding to the brightness of the visible light image in a case where the brightness of the visible light image is not less than the third threshold and not greater than the fourth threshold.

12. The image processing apparatus (100) according to any one of claims 1 to 11, wherein
the second determination means (101) determines the second target value based on contrast of an invisible light image captured together with the visible light image.

13. The image processing apparatus (100) according to claim 12, wherein
the second determination means (101) determines, as the second target value, a target value of a signal level for obtaining an invisible light image with predetermined contrast.

14. The image processing apparatus (100) according to any one of claims 1 to 13, wherein
the third determination means (101) determines the final target value based on a result of weighted addition of the first target value and the second target value.

15. The image processing apparatus (100) according to claim 14, wherein
the third determination means (101) determines a weight of the first target value and a weight of the second target value based on brightness of regions, in the visible light image, where an invisible light image captured in accordance with the settings is to be combined.

16. The image processing apparatus (100) according to claim 1, wherein
in a case where the invisible light image to be used in combining is captured with settings for capturing the visible light image, instead of determining the settings for capturing the invisible light image, the fourth determination means (101) determines a gain to be applied to the invisible light image captured according to the settings for capturing the visible light image, based on the final target value.

17. The image processing apparatus (100) according to claim 16, wherein
the fourth determination means (101) determines the gain so that the gain does not change non-continuously at a boundary between adjacent blocks out of blocks produced by dividing the visible light image.

**18.** The image processing apparatus (100) according to claim 1, wherein
in a case where a limitation applied to settings for capturing the invisible light image and it is not possible to determine the settings for capturing the invisible light image according to the final target value under the limitation, the fourth determination means (101) determines settings for capturing the invisible image under the limitation and also determines a gain for compensating for insufficient exposure.

**19.** The image processing apparatus (100) according to claim 18, further comprising:

applying means (107) for applying the gain to an invisible light image captured according to the settings under the limitation,
wherein the invisible light image to which the gain has been applied is used for combining.

**20.** An image capture apparatus (100) comprising:

an image sensor (105) capable of capturing a visible light image and an invisible light image; and
the image processing apparatus (101) according to any one of claims 1 to 19.

**21.** The image capture apparatus (100) according to claim 20, wherein the image processing apparatus comprising:
recording means (108) for recording:

an invisible light image to be combined with the visible light image; and
information which relates to regions of the visible light image where the invisible light image is to be combined, in association with the visible light image.

**22.** An image processing method that is executed by an image processing apparatus and determines settings for capturing an invisible light image to be combined with a visible light image, the image processing method comprising:

determining (S304) a first target value relating to a signal level of an invisible light image for adjusting brightness of the visible light image;
determining (S304) a second target value relating to a signal level of the invisible light image for adjusting contrast of the visible light image;
determining (S304) a final target value using the first target value and the second target value; and
determining (S305) settings for capturing the invisible light image based on the final target value.

**23.** A computer program for causing a computer to perform the image processing method according to claim 22.

# FIG. 1

EP 4 199 528 A1

# F I G. 2

```
                    ┌─────────┐
                    │  START  │
                    └────┬────┘
                         ↓
      ┌──────────────────────────────────────┐
      │  SEQUENTIALLY CAPTURE VISIBLE LIGHT   │  ~S203
      │      IMAGES AND INFRARED IMAGES       │
      └──────────────────┬───────────────────┘
                         ↓
      ┌──────────────────────────────────────┐
      │     UPDATE SETTINGS FOR CAPTURING     │  ~S205
      └──────────────────┬───────────────────┘
                         ↓
```

S207

HAS IMAGE CAPTURE START INSTRUCTION BEEN INPUT?

NO

YES

```
      ┌──────────────────────────────────────┐
      │       CAPTURE VISIBLE LIGHT           │  ~S209
      │     IMAGES AND INFRARED IMAGES        │
      └──────────────────┬───────────────────┘
                         ↓
      ┌──────────────────────────────────────┐
      │      COMBINE INFRARED IMAGE DATA      │  ~S211
      │     WITH VISIBLE LIGHT IMAGE DATA     │
      └──────────────────┬───────────────────┘
                         ↓
      ┌──────────────────────────────────────┐
      │    GENERATE AND RECORD IMAGE DATA     │  ~S213
      │            FOR RECORDING              │
      └──────────────────┬───────────────────┘
                         ↓
                    ┌─────────┐
                    │   END   │
                    └─────────┘
```

# F I G. 3

```
                    ┌─────────┐
                    │  START  │
                    └─────────┘
                         │
                         ▼
┌──────────────────────────────────────────────┐
│   GENERATE TONE INFORMATION FOR EACH IMAGE     │────S302
└──────────────────────────────────────────────┘
                         │
                         ▼
┌──────────────────────────────────────────────┐
│            SELECT TARGET REGIONS               │────S303
│          FOR ENHANCEMENT PROCESS               │
└──────────────────────────────────────────────┘
                         │
                         ▼
┌──────────────────────────────────────────────┐
│      DETERMINE SIGNAL LEVEL TARGET VALUE       │────S304
│            OF INFRARED IMAGE                    │
└──────────────────────────────────────────────┘
                         │
                         ▼
┌──────────────────────────────────────────────┐
│            DETERMINE SETTINGS                   │────S305
│       FOR CAPTURING INFRARED IMAGE             │
└──────────────────────────────────────────────┘
                         │
                         ▼
                    ┌─────────┐
                    │   END   │
                    └─────────┘
```

401 VISIBLE LIGHT IMAGE
402 INFRARED IMAGE
411 VISIBLE LIGHT IMAGE
412 INFRARED IMAGE

F I G. 4

# F I G. 5

# F I G. 6

# F I G. 7A

COUNT VALUE

701

0

SIGNAL LEVEL

Hmin                    Hmax

HISTOGRAM OF TARGET REGION
OF ENHANCEMENT PROCESS

# F I G. 7B

COUNT VALUE

711

0

SIGNAL LEVEL

grad

HISTOGRAM AFTER ENHANCEMENT PROCESS

# FIG. 8

WEIGHT a OF
SIGNAL LEVEL
TARGET VALUE

1

0.5

0

Th1          Th2          BRIGHTNESS
                          EVALUATION VALUE
                          OF VISIBLE LIGHT IMAGE

# F I G. 9

START

READ VISIBLE LIGHT IMAGE
AND INFRARED IMAGE — S903

DETERMINE SIGNAL LEVEL TARGET VALUE
OF INFRARED IMAGE — S905

HAS IMAGE CAPTURE
START INSTRUCTION
BEEN INPUT? — S207

NO

YES

READ VISIBLE LIGHT IMAGE
AND INFRARED IMAGE — S909

ADJUST SIGNAL LEVEL OF INFRARED IMAGE
IN ACCORDANCE WITH TARGET VALUE — S911

COMBINE INFRARED IMAGE DATA
WITH VISIBLE LIGHT IMAGE DATA — S211

GENERATE AND RECORD IMAGE DATA
FOR RECORDING — S213

END

# FIG. 10

```
START
  │
  ▼
┌─────────────────────────────────────────────┐
│ GENERATE TONE INFORMATION FOR EACH IMAGE    │──S302
└─────────────────────────────────────────────┘
  │
  ▼
┌─────────────────────────────────────────────┐
│ SELECT TARGET REGIONS                       │──S303
│ FOR ENHANCEMENT PROCESS                     │
└─────────────────────────────────────────────┘
  │
  ▼
┌─────────────────────────────────────────────┐
│ DETERMINE SIGNAL LEVEL TARGET VALUE         │──S304
│ OF INFRARED IMAGE                           │
└─────────────────────────────────────────────┘
  │
  ▼
END
```

# FIG. 11A

1101

BLOCK DIVISION RESULT
OF INFRARED IMAGE

# FIG. 11B

1111          1102

ENHANCEMENT REGION
AND TARGET VALUE

# F I G. 11C

ADJACENT BLOCKS AND DISTANCES FROM EACH CENTER

# F I G. 12

| | TARGET VALUE $T_1$ | TARGET VALUE $T_2$ |
|---|---|---|
| AREA | 4 BLOCKS | 3 BLOCKS |
| DIFFERENCE IN TONE INFORMATION | $2n$ | $n$ |

# FIG. 13

START

SEQUENTIALLY CAPTURE VISIBLE LIGHT IMAGES AND INFRARED IMAGES — S203

DETERMINE SIGNAL LEVEL TARGET VALUE OF INFRARED IMAGE — S905

HAS IMAGE CAPTURE START INSTRUCTION BEEN INPUT? — S207

YES

NO

UPDATE SETTINGS FOR CAPTURING OF INFRARED IMAGE — S1313

DETERMINE SETTINGS FOR CAPTURING OF INFRARED IMAGE AND GAIN — S1309

CAPTURE VISIBLE LIGHT IMAGES AND INFRARED IMAGES — S209

APPLY GAIN TO INFRARED IMAGE DATA — S1311

COMBINE INFRARED IMAGE DATA WITH VISIBLE LIGHT IMAGE DATA — S211

GENERATE AND RECORD IMAGE DATA FOR RECORDING — S213

END

# FIG. 14

SETTABLE RANGE

1/250　　1/125　　1/60　　1/30　　1/15　　SHUTTER SPEED (sec)

○ → SHUTTER SPEED 1/30 SECOND → TWO TIMES OF GAIN →

SETTINGS FOR CAPTURING
DURING PRE-CAPTURING

EV=3 →

EP 4 199 528 A1

Europäisches
Patentamt

European
Patent Office

Office européen
des brevets

## EUROPEAN SEARCH REPORT

Application Number

EP 22 21 0753

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2021/044736 A1 (KANEKO SEIGO [JP])<br>11 February 2021 (2021-02-11)<br>* abstract *<br>* paragraph [0008] *<br>* paragraph [0058] – paragraph [0077] *<br>* paragraph [0095] – paragraph [0113] *<br>* paragraph [0130] *<br>* paragraph [0143] – paragraph [0149] *<br>* paragraph [0158] *<br>* paragraph [0162] *<br>* figures 1-17 * | 1-13,<br>16-23<br>14,15 | INV.<br>H04N23/11<br>H04N23/70<br>G06T5/50<br>H04N23/71<br>H04N23/72 |
| A | US 2020/294214 A1 (NUMATA AIHIKO [JP])<br>17 September 2020 (2020-09-17)<br>* abstract *<br>* paragraph [0048] – paragraph [0049] *<br>* figures 1-8D * | 1-23 | |
| A | US 2021/044763 A1 (SUN YUE [CN] ET AL)<br>11 February 2021 (2021-02-11)<br>* abstract *<br>* paragraph [0016] – paragraph [0020] *<br>* figures 1-7 * | 1-23 | TECHNICAL FIELDS SEARCHED (IPC)<br><br>H04N<br>G06T |

The present search report has been drawn up for all claims

| Place of search | Date of completion of the search | Examiner |
|---|---|---|
| Munich | 26 April 2023 | Schreib, Franz |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 21 0753

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2023

| Patent document cited in search report | | | Publication date | Patent family member(s) | | | Publication date |
|---|---|---|---|---|---|---|---|
| US 2021044736 | A1 | | 11-02-2021 | JP | 2021027535 | A | 22-02-2021 |
| | | | | US | 2021044736 | A1 | 11-02-2021 |
| US 2020294214 | A1 | | 17-09-2020 | CN | 111698434 | A | 22-09-2020 |
| | | | | EP | 3709260 | A1 | 16-09-2020 |
| | | | | JP | 2020150331 | A | 17-09-2020 |
| | | | | KR | 20200108790 | A | 21-09-2020 |
| | | | | US | 2020294214 | A1 | 17-09-2020 |
| US 2021044763 | A1 | | 11-02-2021 | CN | 108965654 | A | 07-12-2018 |
| | | | | EP | 3751833 | A1 | 16-12-2020 |
| | | | | US | 2021044763 | A1 | 11-02-2021 |
| | | | | WO | 2019153787 | A1 | 15-08-2019 |

EPO FORM P0459

For more details about this annex : see Official Journal of the European Patent Office, No. 12/82

**REFERENCES CITED IN THE DESCRIPTION**

**Patent documents cited in the description**

- JP 2017157902 A